# EUROPEAN PATENT APPLICATION

(11) **EP 4 286 350 A1**
(43) Date of publication of application: **06.12.2023**
(21) Application number: 22382523.3
(22) Date of filing: 31.05.2022
(51) Int. Cl.: C04B 28/02, C04B 28/04, C04B 28/06, C04B 28/08, C04B 28/10, C04B 28/14, C04B 40/00, C04B 103/10

(54) **ACCELERATORS FOR THE REACTION OF HIGH-SILICA ALUMINOSILICATES WITH WATER**

(71) Applicant: Sika Technology AG, 6340 Baar (CH)
(72) Inventor: GALLUCCI, Emmanuel, 8048 Zürich (CH); CEREDA, Cristiano, 24033 Calusco d'Adda (BG) (IT); GARCIA, Ramiro, 28108 Alcobendas (Madrid) (ES); SOUDIER, Jerome, 01150 Vaux en Bugey (FR)
(74) Representative: Sika Patent Attorneys

(57) **Abstract**

The present invention relates to accelerators for the reaction of high-silica aluminosilicates with water. Said accelerator being selected from the group consisting of alkanolamines, reducing agents, sugars, sugar acids, carboxylic acids or their salts, amino acids or their salts, sulfamic acid, glyoxal, acetylacetone, pyrocatechol, nitrilotri(methylphosphonic acid), etidronic acid, mineral salts, or mixtures thereof. The present invention also relates to binders comprising high-silica aluminosilicates and said accelerators as well as their use in construction materials.

## Description

### Technical field

The present invention relates to accelerators for the reaction of high-silica aluminosilicates with water. The present invention also relates to binders comprising high-silica aluminosilicates and said accelerators as well as their use in construction materials.

### Background of the invention

Cement-based building materials, especially concrete or mortars, rely on cementitious materials as binders. Cementitious binders typically are mineral, hydraulic binders the most abundant of which are cements and especially Ordinary Portland Cement (OPC). However, the use of cements and especially of Ordinary Portland Cement has a high environmental footprint. One major reason are the high CO₂ emissions associated with the manufacture of cements. Many efforts have thus been made to replace cements at least partially as binders from building materials.

One possibility is the use of materials with cementitious properties, so called supplementary cementitious materials (SCM). Supplementary cementitious materials may have hydraulic properties, pozzolanic properties, and/or latent hydraulic properties. Supplementary cementitious materials that are known for many years include steelmaking slag, calcined clays, natural pozzolans such as volcanic ashes, silica fume, or fly ash.

It is well known in the art that supplementary cementitious materials may be activated to play their role as hydraulic binders.

For example, WO 2020/025504 (St. Gobain) discloses binders based on clay minerals and teaches that flocculating agents, especially polycationic polymers, improve the cohesion of such clay-based binders.

WO 2019/110134 (Ecocem) discloses slag-based binders with an activator for the slag/water reaction selected from alkali metal carbonates, mineral wastes, silica fume, rice husk ash, and/or phosphoric acid. Soluble chlorides, fluorides, and/or sulfates are mentioned as suitable co-activators. Additionally, chelatants are disclosed which are chosen from phosphonates, phosphates, carboxylates, and amines.

One class of supplementary cementitious materials are aluminosilicates and, for example, high-silica aluminosilicates.

It is well known in the art that aluminosilicates can be activated and reacted with water to form so-called geopolymers, for example by highly alkaline components such as alkali metal silicates, alkali metal hydroxides, or lime (see WO 2010/079414 (S. Alter)).

There remains a demand for alternative accelerators for supplementary cementitious materials, and especially for high-silica aluminosilicates, to make such high-silica aluminosilicates useful in hydraulically setting compositions. Typically, very alkaline chemicals and/or accelerators that lead to high dust emissions during handling should be avoided.

### Summary of the invention

It is an objective of the present invention to provide accelerators for the reaction of high-silica aluminosilicates with water. Specifically, the accelerators should have high activation potential, good availability, low alkalinity, and be safe to handle.

It is also an objective of the present invention to provide binders based on high-silica aluminosilicates which can be used to replace OPC-based binders.

It is another object of the present invention to provide construction materials based on binders based on high-silica aluminosilicates, especially concrete and mortar compositions.

It has surprisingly been found that chemicals chosen from the group consisting of alkanolamines, reducing agents, sugars, sugar acids, carboxylic acids and their salts, amino acids and their salts, sulfamic acid, glyoxal, acetylacetone, pyrocatechol, nitrilotri(methylphosphonic acid), etidronic acid, mineral salts, or mixtures thereof, are suitable accelerators for the reaction of high-silica aluminosilicates with water.

The present invention thus relates to the use of an accelerator for the reaction of high-silica aluminosilicates with water, said accelerator being selected from the group consisting of alkanolamines, reducing agents, sugars, sugar acids, carboxylic acids and their salts, amino acids and their salts, sulfamic acid, glyoxal, acetylacetone, pyrocatechol, nitrilotri(methylphosphonic acid), etidronic acid, mineral salts, or mixtures thereof.

It has been found that an accelerator of the present invention leads to an increase in strength, especially in compressive strength as measured according to EN 12190, of the mixture comprising high-silica aluminosilicates, water, and the accelerator after a given point of time as compared to the strength, especially the compressive strength, of a mixture of high-silica aluminosilicates and water in the same ratio but without the accelerator added and measured after the same time. The time is always measured from the point of addition of water to the high-silica aluminosilicate.

It has further been found that accelerators of the present invention can have a positive influence on the rheology of a mixture of high-silica aluminosilicates with water. A positive influence in this context means that the viscosity of a mixture comprising high-silica aluminosilicates, water, and the accelerator is lower as compared to the viscosity of a mixture of high-silica aluminosilicates and water in the same ratio but without the accelerator added.

It has further been found that accelerators of the present invention can have a positive influence on the water demand of a mixture of high-silica aluminosilicates with water. A positive influence in this context means that the water demand for achieving a given consistency after mixing of a mixture comprising high-silica aluminosilicates, water, and the accelerator is lower as compared to the water demand for achieving the same consistency of a mixture of high-silica aluminosilicates and water in the same ratio but without the accelerators added.

It has further been found that accelerators of the present invention can have a positive influence on the fluidity decay over time after wet mixing. A positive influence in this context means that loss of fluidity of a mixture comprising high-silica aluminosilicates, water, and accelerator is lower as compared to the loss of fluidity of a mixture of high-silica aluminosilicates and water in the same ratio but without the accelerator added.

Further aspects of the present invention are the subject of independent claims. Preferred embodiments of the present invention are the subject of dependent claims.

### Detailed Ways of carrying out the invention

In a first aspect the present invention relates to the use of an accelerator for the reaction of high-silica aluminosilicates with water, said accelerator being selected from the group consisting of alkanolamines, reducing agents, sugars, sugar acids, carboxylic acids and their salts, amino acids and their salts, sulfamic acid, glyoxal, acetylacetone, pyrocatechol, nitrilotri(methylphosphonic acid), etidronic acid, mineral salts, or mixtures thereof.

High-silica aluminosilicates within the present context are materials of pozzolanic and/or latent hydraulic nature having aluminosilicates as constituents, and which are characterized by a high content of silica (SiO₂) in their chemical composition. The chemical composition of high-silica aluminosilicates can be determined by XRF as described in EN 196-2:2013. High-silica aluminosilicates of the present invention may comprise other oxides, besides SiO₂ and Al₂O₃. Other oxides may be, for example, boron oxides, calcium oxide, titanium oxide, iron oxides, zinc oxides. The term "oxides" generally also encompasses the respective hydroxides and/or mixed oxides/hydroxides.

A high content of SiO₂ can be expressed in w% relative to the total dry weight of the high-silica aluminosilicates. Thus, high-silica aluminosilicates of the present invention can be characterized by a content of SiO₂ of not less than 40 w%, preferably not less than 50 w%, relative to the total dry weight of the respective high-silica aluminosilicates, and determined by XRF as described in EN 196-2:2013.

A high-silica aluminosilicate of the present invention can be characterized by a chemical composition where the weight ratio of SiO₂ to Al₂O₃ is between 50:50 and 100:0, preferably between 65:35 and 95:5. Preferred high-silica aluminosilicate of the present invention have a weight ratio of (SiO₂ + Al₂O₃) to CaO of between 75:25 to 100:0, preferably between 83:17 to 100:0, more preferably between 90:10 and 99:1, and at the same time have a weight ratio of SiO₂ to Al₂O₃ of between 50:50 and 100:0, preferably between 65:35 and 95:5.

Suitable high-silica aluminosilicates within the present context are selected from vitreous pumice, vitreous volcanic ash, zeolitized tuff, diatomaceous earth, fly ash, silica fume, kiln dust, microsilica, pyrogenic silica, precipitated silica, burnt oil shale, burnt residues of organic matter, and mixtures thereof. Fly ash especially is class F fly ash according to standard ASTM C618.

Within the present context, high-silica aluminosilicates are not steelmaking slags, especially are not ground granulated blast furnace slag (GGBS) or basic oxygen furnace slag (BOS) and are not class C fly ash according to standard ASTM C618. Additionally, within the present context, high-silica aluminosilicates are not clay minerals or calcined clays.

The particle size of a high-silica aluminosilicate can be analyzed by sieve analysis as described for example in standard ASTM C136/C136M. The process separates fine particles from more course particles by passing the material through a number of sieves of different mesh sizes. The material to be analyzed is vibrated through a series of sequentially decreasing sieves using a single, or combination of horizontal, vertical or rotational motion. As a result, the percentage of particles retained on a sieve of a given size is given.

Another measure for the fineness of a high-silica aluminosilicate is the Blaine surface. The Blaine surface can be determined according to NF EN 196-6. According to a preferred embodiment, the high-silica aluminosilicate has a Blaine surface of between 1000 -8000 cm²/g, preferably 2000 - 6000 cm²/g, more preferably 3000 - 5000 cm²/g. This is because the accelerators will accelerate the reaction of high-silica aluminosilicates with water to such an extent that also coarser SCM can be used. Coarser SCM may have the advantage of better availability and lower cost as compared to fine SCM. It is, however, also possible to use a high-silica aluminosilicate with a higher specific surface.

The present invention relates to the use of accelerators for the reaction of high-silica aluminosilicates with water. When high-silica aluminosilicates react with water, a hydration reaction occurs, and different mineral phases are being formed. Thereby, water and SCM are consumed, hardening proceeds and strength is developed. A suitable method to measure the reaction of high-silica aluminosilicates with water therefore is the measurement of strength, especially compressive strength. A higher compressive strength corresponds to a higher reaction progress, i.e. more mineral phases being formed. An acceleration of the reaction of high-silica aluminosilicates with water can thus be determined by comparing the strength, especially the compressive strength, of different mixtures after a given time of reaction, for example after 2 days, after 7 days, and/or after 28 days. An accelerator for the reaction of high-silica aluminosilicates with water will lead to an increase in strength, especially in compressive strength, of the mixture comprising high-silica aluminosilicates, water, and the accelerator after a given point of time as compared to the strength, especially the compressive strength, of a mixture of high-silica aluminosilicates and water in the same ratio but without the accelerator added and measured after the same time. The time is always measured from the point of addition of water to the high-silica aluminosilicate. A suitable procedure for the measurement of compressive strength is described in EN 12190.

The accelerators for the reaction of high-silica aluminosilicates with water are selected from the group consisting of alkanolamines, reducing agents, sugars, sugar acids, carboxylic acids and their salts, amino acids and their salts, sulfamic acid, glyoxal, acetylacetone, pyrocatechol, nitrilotri(methylphosphonic acid), etidronic acid, mineral salts, or mixtures thereof.

One type of suitable accelerators are alkanolamines. Alkanolamines are preferably selected from the group consisting of monoethanolamine, diethanolamine, triethanolamine (TEA), diethanolisopropanolamine (DEIPA), ethanoldiisopropanolamine (EDIPA), isopropanolamine, diisopropanolamine, triisopropanolamine (TIPA), N-methyldiisopropanolamine (MDIPA), N-methyldiethanolamine (MDEA), tetrahydroxyethylethylenediamine (THEED), and tetrahydroxyiso-propylethylenediamine (THIPD), as well as mixtures of two or more of these alkanolamines.

Preferred alkanolamines are triethanolamine (TEA), triisopropanolamine (TIPA), diethanolisopropanolamine (DEIPA), and ethanoldiisopropanolamine (EDIPA). Especially preferred alkanolamines are diethanolisopropanolamine (DEIPA), ethanoldiisopropanolamine (EDIPA), and triisopropanolamine (TIPA).

Another type of suitable accelerators are sugars. A "sugar" in the sense of the present invention is a carbohydrate having an aldehyde group. In particularly preferred embodiments, the sugar belongs to the group of monosaccharides or disaccharides. Examples of sugars include, but are not limited to, glyceraldehyde, threose, erythrose, xylose, lyxose, ribose, arabinose, allose, altrose, glucose, mannose, gulose, idose, galactose, tallose, fructose, sorbose, lactose, maltose, sucrose, lactulose, trehalose, cellobiose, chitobiose, isomaltose, palatinose, mannobiose, raffinose, and xylobiose. Sugars can also be used in form of dextrines, vinasse, or molasse. Both, D and L-form of sugars are likewise preferred. Especially preferred sugars are fructose, mannose, maltose, glucose, galactose, dextrines, vinasse, and molasses.

Another type of suitable accelerators are sugar acids or their salts. A "sugar acid" in the context of the present invention is a monosaccharide having a carboxyl group. It may belong to any of the classes of aldonic acids, ursonic acids, uronic acids or aldaric acids. Preferably, it is an aldonic acid. Examples of sugar acids useful in connection with the present invention include, but are not limited to gluconic acid, ascorbic acid, neuraminic acid, glucuronic acid, galacturonic acid, iduronic acid, mucilic acid and saccharic acid. The sugar acid may be in the form of the free acid or as a salt. According to embodiments, salts of sugar acids may be salts with metals of groups la, Ila, lb, IIb, IVb, Vlllb of the periodic table of elements. Preferred salts of sugar acids are salts of alkali metals, alkaline earth metals, iron, cobalt, copper or zinc. Especially preferred are salts with sodium, potassium, and calcium. Both, D- and L-form of sugar acids are likewise preferred. An especially preferred sugar acid is gluconic acid and its salts, especially sodium gluconate.

Another type of suitable accelerators are amino acids or their salts. Amino acids preferably are selected from the group consisting of glycine, lysine, glutamate, glutamic acid, aspartic acid, polyaspartic acid, methionine, nitrilotriacetic acid (NTA), iminodisuccinic acid, methylglycine-N,N-diacetic acid, and N,N-bis(carboxylatomethyl)glutamic acid, ethylenediamine disuccinic acid (EDDS), ethylenediamine tetraacetic acid (EDTA), hexamethylendiamine tatraacetic acid (HEDTA), diethylenetriamine pentaacetic acid (DTPA) or their salts. Especially preferred are salts of alkali metals or alkaline earth metals. In particular, salts are selected from the group consisting of tetrasodium N,N-bis(carboxylatomethyl)glutamate, trisodium methylglycine-N,N-diacetate, tetrasodium iminodisuccinate (IDS), trisodium ethylenediamine disuccinate, tetrasodium ethylenediamine tetraacetate, and tetrasodium hexamethylendiamine tetraacetate.

Another type of suitable accelerators are carboxylic acids or their salts. The term "carboxylic acid" means any organic molecule with a carboxylic acid or carboxylate group, except sugar acids as described above or amino acids as described above. Especially preferred carboxylic acids are formic acid, glycolic acid, citric acid, lactic acid, malic acid, tartaric acid, oxalic acid, malonic acid, succinic acid, glutaric acid, adipic acid, and salicylic acid. The carboxylic acid may be in the form of the free acid or in the form of a salt.

According to embodiments, salts of carboxylic acids may be salts with metals of groups la, Ila, lb, IIb, IVb, Vlllb of the periodic table of elements. Preferred salts of sugar acids are salts of alkali metals, alkaline earth metals, iron, cobalt, copper or zinc. Especially preferred are salts with sodium, potassium, and calcium. Preferred salts of carboxylic acids are calcium malonate, calcium succinate, calcium lactate, potassium citrate, and sodium citrate.

Another type of suitable accelerators are reducing agents. Within the present context reducing agents are materials with a reduction potential measured under standard conditions against a standard reference hydrogen half-cell of below 0.77 V. That is, suitable reducing agents have a half-cell potential lower than the couple Fe³⁺/Fe²⁺. Reducing agents are preferably selected from the group consisting of thiosulfates, thiocyanates, and sulfides, preferably from sodium thiocyanate, sodium thiosulfate or potassium sulfide. Reducing agents within the present context do not belong to any of the groups of alkanolamines, sugars, sugar acids, carboxylic acids and their salts, or amino acids and their salts as described above.

Other suitable accelerators are sulfamic acid, glyoxal, acetylacetone, pyrocatechol, nitrilotri(methylphosphonic acid), and etidronic acid.

Another type of suitable accelerators are mineral salts. Within the present context mineral salts are salts selected from the group consisting of alkaline metal or earth alkaline metal nitrates, alkaline metal or earth alkaline metal nitrites, alkaline metal or earth alkaline metal chlorides, aluminum sulfate, aluminum chloride, sodium sulfate, and calcium sulfate. Especially preferred mineral salts are sodium chloride, calcium nitrite, calcium nitrate, calcium chloride, magnesium chloride, aluminum sulfate, aluminum chloride, sodium sulfate, and calcium sulfate.

According to embodiments, the accelerator is selected from the group consisting of triethanolamine (TEA), triisopropanolamine (TIPA), diethanolisopropanolamine (DEIPA), ethanoldiisopropanolamine (EDIPA), fructose, mannose, maltose, glucose, galactose, dextrines, vinasse, molasses, gluconic acid, ascorbic acid, neuraminic acid, glucuronic acid, galacturonic acid, iduronic acid, mucilic acid, saccharic acid and their sodium, potassium or calcium salts, formic acid, glycolic acid, citric acid, lactic acid, malic acid, tartaric acid, oxalic acid, malonic acid, succinic acid, glutaric acid, adipic acid, salicylic acid and their sodium, potassium or calcium salts, glycine, glutamic acid, aspartic acid, polyaspartic acid, tetrasodium iminodisuccinate (IDS), diethylenetriaminepentaacetic acid (DTMA), nitrilotriacetic acid (NTA), sulfamic acid, glyoxal, acetylacetone, pyrocatechol, nitrilotri(methylphosphonic acid), etidronic acid, sodium thiocyanate, sodium chloride, calcium nitrite, calcium nitrate, calcium chloride, magnesium chloride, calcium sulfate, aluminum sulfate, aluminum chloride, sodium sulfate, thiosulfates, especially sodium thiosulfate, thiocyanates, and sulfides, especially potassium sulfide.

According to particularly preferred embodiments, the accelerator is selected from the group consisting of diethanolisopropanolamine (DEIPA), ethanoldiisopropanolamine (EDIPA), lactic acid, calcium lactate, oxalic acid, malonic acid, succinic acid, adipic acid, malic acid, tartaric acid, citric acid, sodium citrate, potassium citrate, gluconic acid, sodium gluconate, glycine, sulfamic acid, glyoxal, acetylacetone, pyrocatechol, tetrasodium iminodisuccinate (IDS), nitrilotriacetic acid (NTA), and calcium sulfate.

According to further preferred embodiments, the accelerator is a mixture of two alkanolamines or of an alkanolamine with at least one further accelerator different from an alkanolamine.

According to especially preferred embodiments, the accelerator is a mixture of diethanolisopropanolamine (DEIPA) and triisopropanolamine (TIPA).

According to further embodiments, the accelerator is a mixture of an alkanolamine selected from the group consisting of triethanolamine (TEA), triisopropanolamine (TIPA), diethanolisopropanolamine (DEIPA), ethanoldiisopropanolamine (EDIPA), and/or methyldiethanolamine (MDEA), especially of TIPA and/or DEIPA, and one further accelerator selected from the group consisting of fructose, mannose, maltose, glucose, galactose, dextrines, vinasse, molasses, gluconic acid, ascorbic acid, neuraminic acid, glucuronic acid, galacturonic acid, iduronic acid, mucilic acid, saccharic acid and their sodium, potassium or calcium salts, formic acid, glycolic acid, citric acid, lactic acid, malic acid, tartaric acid, oxalic acid, malonic acid, succinic acid, glutaric acid, adipic acid, salicylic acid and their sodium, potassium or calcium salts, glycine, glutamic acid, aspartic acid, polyaspartic acid, tetrasodium iminodisuccinate (IDS), diethylenetriaminepentaacetic acid (DTMA), nitrilotriacetic acid (NTA), sulfamic acid, glyoxal, acetylacetone, pyrocatechol, nitrilotri(methylphosphonic acid), etidronic acid, sodium thiocyanate, sodium chloride, calcium nitrite, calcium nitrate, calcium chloride, magnesium chloride, calcium sulfate, aluminum sulfate, aluminum chloride, sodium sulfate, thiosulfates, especially sodium thiosulfate, thiocyanates, and sulfides, especially potassium sulfide.

Preferred embodiments of an accelerator of the present invention are mixtures of TIPA and/or DEIPA with at least one of lactic acid, malic acid, tartaric acid, citric acid, sodium citrate, potassium citrate, malonic acid, succinic acid, adipic acid, glycine, sulfamic acid, or their salts, pyrocatechol, sugars, especially fructose, tetrasodium iminodisuccinate (IDS), calcium chloride, and calcium sulfate.

Especially preferred embodiments of an accelerator of the present invention are mixtures of TIPA and/or DEIPA with sugars, preferably fructose.

Further especially preferred embodiment of an accelerator of the present invention are mixtures of TIPA and/or DEIPA with citric acid or its salts, especially with citric acid, sodium citrate, potassium citrate, or calcium citrate.

According to further embodiments, the accelerator is a mixture of an alkanolamine selected from the group consisting of triethanolamine (TEA), triisopropanolamine (TIPA), diethanolisopropanolamine (DEIPA), ethanoldiisopropanolamine (EDIPA), and/or methyldiethanolamine (MDEA), especially of TIPA and/or DEIPA, and two further accelerators, the first further accelerator being selected from sugars, especially fructose, mannose, maltose, glucose, or galactose, and the second further accelerator being selected from the group consisting of mineral salts and reducing agents, preferably from sodium thiocyanate, sodium chloride, calcium chloride, magnesium chloride, calcium nitrite, calcium nitrate, aluminum sulfate, aluminum chloride, sodium sulfate, calcium sulfate, sodium thiosulfate and potassium sulfide.

Further especially preferred embodiments of an accelerator of the present invention are mixtures of TIPA and/or DEIPA with a sugar, preferably fructose, and with a carboxylic acid or its salts, preferably citric acid, sodium citrate, potassium citrate, or calcium citrate.

Further especially preferred embodiments of an accelerator of the present invention are mixtures of TIPA and/or DEIPA with a sugar, preferably fructose, and with at least one of sodium thiocyanate, sodium chloride, aluminum sulfate, or calcium nitrite.

Further especially preferred embodiments of an accelerator of the present invention are mixtures of TIPA and/or DEIPA with calcium sulfate or calcium nitrate.

According to further embodiments, the accelerator is a mixture of an alkanolamine selected from the group consisting of triethanolamine (TEA), triisopropanolamine (TIPA), diethanolisopropanolamine (DEIPA), ethanoldiisopropanolamine (EDIPA), and/or methyldiethanolamine (MDEA), especially of TIPA and/or DEIPA, and two further accelerators the first further accelerator being selected from sugars, especially fructose, mannose, maltose, glucose, or galactose, and the second further accelerator being selected from the group consisting of sugar acids, carboxylic acids and sulfamic acid, especially gluconic acid, ascorbic acid, neuraminic acid, glucuronic acid, galacturonic acid, iduronic acid, mucilic acid, saccharic acid, salicylic acid and their sodium, potassium or calcium salts, formic acid, glycolic acid, citric acid, lactic acid, malic acid, tartaric acid, oxalic acid, malonic acid, succinic acid, glutaric acid, adipic acid, and their sodium, potassium or calcium salts.

According to further embodiments, the accelerator is a mixture of an alkanolamine selected from the group consisting of triethanolamine (TEA), triisopropanolamine (TIPA), diethanolisopropanolamine (DEIPA), ethanoldiisopropanolamine (EDIPA), and/or methyldiethanolamine (MDEA), especially of TIPA and/or DEIPA, and three further accelerators the first further accelerator being selected from sugars, preferably fructose, mannose, maltose, glucose, or galactose, and the second further accelerator being selected from the group consisting of sugar acids, carboxylic acids and sulfamic acid, preferably gluconic acid, ascorbic acid, neuraminic acid, glucuronic acid, galacturonic acid, iduronic acid, mucilic acid, saccharic acid and their sodium, potassium or calcium salts, formic acid, glycolic acid, citric acid, lactic acid, malic acid, tartaric acid, oxalic acid, malonic acid, succinic acid, glutaric acid, adipic acid, salicylic acid and their sodium, potassium or calcium salts, and the third further accelerator being selected from the group consisting of mineral salts and reducing agents, preferably from sodium thiocyanate, sodium chloride, calcium chloride, magnesium chloride, calcium nitrite, calcium nitrate, aluminum sulfate, aluminum chloride, sodium sulfate, calcium sulfate, sodium thiosulfate and potassium sulfide.

According to embodiments, the accelerators of the present invention are used in a pure, undiluted form.

According to different embodiments, the accelerators of the present invention are used as an admixture or as part of an admixture. An admixture comprises or consists of the accelerator or the mixture of accelerators and optionally further ingredients. Such further ingredients can for example be a solvent, especially water, biocides, or pigments. Accelerators of the present invention may thus also be used in a dispersed or dissolved state, especially dispersed or dissolved in water.

Where the accelerator of the present invention is a mixture of two or more accelerators as described above or where an admixture is used, the accelerator or admixture can be present as a one-component, a two-component, or a multi-component composition. This means that the individual constituents forming the accelerator or admixture of the present invention can be present in an already mixed state within one receptable, forming a one-component composition. The accelerators can also be present in two or more spatially separated receptables forming a two-component or a multi-component composition. This might have benefits regarding the shelf life of the accelerator mixture. This might also facilitate mixing of the accelerators in variable ratios with the high-silica aluminosilicate and water. Where the accelerators of the present invention are present in a two-component or in a multi-component composition, they can be pre-mixed or be added individually at the same point of time or be added individually at different points of times.

According to embodiments, the accelerator of the present invention is added in a total amount of between 0.005 - 25 w%, relative to the total dry weight of the high-silica aluminosilicate. A total amount refers to the sum of w% of all accelerators present.

According to preferred embodiments, alkanolamines are added in a total amount of between 0.005 - 5 w%, preferably 0.01 - 3 w%, relative to the total dry weight of the high-silica aluminosilicate.

According to preferred embodiments, sugars are added in a total amount of between 0.005 - 5 w%, preferably 0.01 - 3 w%, relative to the total dry weight of the high-silica aluminosilicate.

According to preferred embodiments, carboxylic acids are added in a total amount of between 0.005 - 5 w%, preferably 0.01 - 3 w%, relative to the total dry weight of the high-silica aluminosilicate.

According to preferred embodiments, amino acids are added in a total amount of between 0.005 - 5 w%, preferably 0.01 - 3 w%, relative to the total dry weight of the high-silica aluminosilicate.

According to preferred embodiments, reducing agents, especially sodium thiocyanate, are added in a total amount of between 0.05 - 10 w%, preferably 0.1 - 6 w%, relative to the total dry weight of the high-silica aluminosilicate.

According to preferred embodiments, mineral salts are added in a total amount of between 0.005 - 25 w%, preferably 0.1 - 10 w% or 2 - 25 w%, more preferably 0.1 - 6 w% or 10 - 25 w%, relative to the total dry weight of the high-silica aluminosilicate. The ranges of 2 - 25 w%, preferably 10 - 25 w% especially refer to the use of sodium chloride, aluminum sulfate, or calcium sulfate as mineral salts.

According to embodiments, any of sulfamic acid, glyoxal, acetylacetone, pyrocatechol, nitrilotri(methylphosphonic acid), and etidronic acid is added in an amount of between 0.05 - 10 w%, preferably 0.1 - 6 w%, relative to the total dry weight of the high-silica aluminosilicate.

It has been found that a too high dosage of the accelerator relative to the high-silica aluminosilicate reduces the accelerating effect.

Where a mixture of two or more accelerators as described above is used, it is preferred that a weight ratio of (where present) any of
- alkanolamine to sugar,
- alkanolamine to carboxylic acid,
- alkanolamine to amino acid,
- sugar to amino acid,
- carboxylic acid to amino acid, or
- alkanolamine, sugar, carboxylic acid, and amino acid to any of sulfamic acid, glyoxal, acetylacetone, pyrocatechol, nitrilotri(methylphosphonic acid), and etidronic acid
is in the range of 1:50 to 50:1, preferably 1:20 to 20:1

Where a mixture of two or more accelerators as described above is used, it is preferred that a weight ratio of (where present) any selection or combination of alkanolamine, sugar, carboxylic acid, amino acid, sulfamic acid, glyoxal, acetylacetone, pyrocatechol, nitrilotri(methylphosphonic acid), and etidronic to any selection or combination of mineral salt and reducing agent is within the range of 1:5000 to 1:1000, preferably 1:2500 to 1:1000.

In another aspect the present invention also relates to a binder based on high-silica aluminosilicate, preferably for use as a binder in concrete or mortars, said binder comprising or consisting of
a) at least one high-silica aluminosilicate, preferably vitreous pumice, vitreous volcanic ash, zeolitized tuff or mixtures thereof,
b) at least one accelerator for the reaction of the high-silica aluminosilicate with water, said accelerator being selected from the group consisting of alkanolamines, reducing agents, sugars, sugar acids, carboxylic acids or their salts, amino acids or their salts, sulfamic acid, glyoxal, acetylacetone, pyrocatechol, sulfamic acid, glyoxal, acetylacetone, pyrocatechol, nitrilotri(methylphosphonic acid), etidronic acid, mineral salts, or mixtures thereof,
c) optionally at least one co-binder
d) optionally further additives different from b).

It is to be understood that any embodiments, especially related to the high-silica aluminosilicate and the at least one accelerator, described as preferred above also apply to the binder based on high-silica aluminosilicate of the present invention.

According to some embodiments, a binder based on high-silica aluminosilicate of the present invention comprises an accelerator selected from the group consisting of diethanolisopropanolamine (DEIPA), ethanoldiisopropanolamine (EDIPA), lactic acid, calcium lactate, oxalic acid, malonic acid, succinic acid, adipic acid, malic acid, tartaric acid, citric acid, gluconic acid, sodium gluconate, glycine, sulfamic acid, glyoxal, acetylacetone, pyrocatechol, tetrasodium iminodisuccinate (IDS), nitrilotriacetic acid (NTA), and calcium sulfate.

According to further embodiments, a binder based on high-silica aluminosilicate of the present invention comprises an accelerator which is a mixture of diethanolisopropanolamine (DEIPA) and triisopropanolamine (TIPA).

According to further embodiments, a binder based on high-silica aluminosilicate of the present invention comprises an accelerator which is a mixture of an alkanolamine selected from the group consisting of triethanolamine (TEA), triisopropanolamine (TIPA), diethanolisopropanolamine (DEIPA), ethanoldiisopropanolamine (EDIPA), and/or methyldiethanolamine (MDEA), especially of TIPA and/or DEIPA, and one further accelerator selected from the group consisting of lactic acid, malic acid, tartaric acid, citric acid, malonic acid, succinic acid, adipic acid, glycine, sulfamic acid, or their salts, pyrocatechol, sugars, especially fructose, tetrasodium iminodisuccinate (IDS), calcium chloride, and calcium sulfate.

According to further embodiments, a binder based on high-silica aluminosilicate of the present invention comprises an accelerator which is a mixture of an alkanolamine selected from the group consisting of triethanolamine (TEA), triisopropanolamine (TIPA), diethanolisopropanolamine (DEIPA), ethanoldiisopropanolamine (EDIPA), and/or methyldiethanolamine (MDEA), especially of TIPA and/or DEIPA, and two further accelerators, the first further accelerator being selected from sugars, especially fructose, mannose, maltose, glucose, or galactose, and the second further accelerator being selected from the group consisting of mineral salts, preferably of sodium chloride, calcium chloride, calcium nitrite, calcium nitrate, aluminum sulfate, aluminum chloride, sodium sulfate, and calcium sulfate.

A co-binder within the present context is an inorganic binder selected from the group consisting of cement, gypsum, lime, calcined magnesia, caustic magnesia, alumina, latent hydraulic binders, and/or pozzolans. Latent hydraulic binders and/or pozzolans used as co-binders differ chemically from high-silica aluminosilicate as defined above. Especially, slag such as ground granulated blast furnace slag and basic oxygen slag, clay minerals, especially calcined clays, and/or class C fly ash are latent hydraulic binders and/or pozzolans which are chemically different from the high-silica aluminosilicates of the present invention and may be used as co-binders. Cements can in particular be Portland cements of type CEM I, CEM II, and CEM IV with the exception of CEM II/A-S and CEM II/B-S as described in standard EN 197-1, calcium aluminate cements as described in standard EN 14647, and/or calcium sulfoaluminate cements. The term "gypsum" is meant to encompass CaSO₄ in various forms, in particular CaSO₄ anhydrite, CaSO₄ α- and β-hemihydrate, and CaSO₄ dihydrate. The term "lime" is meant to encompass natural hydraulic lime, formulated lime, hydraulic lime, and air lime as described in the standard EN 459-1:2015. The term "alumina" stands for aluminum oxides, aluminum hydroxides, and/or aluminum oxy-hydroxides such as gibbsite and boehmite, calcined or flash calcined alumina, alumina resulting from the Bayer process, hydratable alumina such as amorphous mesophase alumina and rho phase alumina. Preferably, the co-binder is selected from the group consisting of Portland cement, calcium aluminate cement, calcium sulfoaluminate cement, gypsum, hydraulic lime, air lime, calcined magnesia, caustic magnesia, calcined alumina, hydratable alumina, aluminum hydroxide, slag such as ground granulated blast furnace slag and basic oxygen slag, clay minerals, especially calcined clays, and/or class C fly.

According to embodiments, where a co-binder is present, a weight ratio of high-silica aluminosilicates, especially vitreous pumice, vitreous volcanic ash, zeolitized tuff, burnt oil shale, to co-binder in a binder based on high-silica aluminosilicate is between 1:19 - 19:1, preferably 1:9 - 15:1, more preferably 1:6 - 12:1, still more preferably 1:5 - 9:1, highly preferred 1:3 - 6: 1, especially 1:1 - 5:1.

Optionally, a slag-based binder of the present invention additionally comprises further additives different from the accelerator for the reaction of high-silica aluminosilicates with water. According to embodiments, such further additives are selected from the group consisting of plasticizers, superplasticizers, shrinkage reducers, air entrainers, de-aerating agents, stabilizers, viscosity modifiers, thickeners, water reducers, retarders, water resisting agents, fibers, blowing agents, defoamers, redispersible polymer powders, dedusting agents, chromate reducers, pigments, biocides, corrosion inhibitors, and steel passivating agents.

According to some embodiments, a binder based on high-silica aluminosilicate of the present invention comprises or consists of (in each case relative to the total dry weight of the binder)
a) 75 - 99.995 w%, preferably 95 - 99.99 w%, of at least one high-silica aluminosilicate, preferably vitreous pumice, vitreous volcanic ash, zeolitized tuff, burnt oil shale,
b)0.005 - 25 w%, preferably 0.01 - 5 w%, of at least one accelerator for the reaction of the at least one high-silica aluminosilicate with water, where said accelerator is selected from the group consisting of alkanolamines, reducing agents, sugars, sugar acids, carboxylic acids or their salts, amino acids or their salts, sulfamic acid, glyoxal, acetylacetone, pyrocatechol, nitrilotri(methylphosphonic acid), etidronic acid, mineral salts, or mixtures thereof.

According to further embodiments, a binder based on high-silica aluminosilicate of the present invention comprises or consists of (in each case relative to the total dry weight of the binder)
a) 74.9 - 99.895 w%, preferably 74.99 - 99.89 w%, of at least one high-silica aluminosilicate, preferably vitreous pumice, vitreous volcanic ash, zeolitized tuff, burnt oil shale,
b) 0.005 - 25 w%, preferably 0.01 - 5 w%, of at least one accelerator for the reaction of the at least one high-silica aluminosilicate with water,
c) 0.1 - 25 w% of a co-binder selected from cement or lime,
where said accelerator is selected from the group consisting of alkanolamines, reducing agents, sugars, sugar acids, carboxylic acids or their salts, amino acids or their salts, sulfamic acid, glyoxal, acetylacetone, pyrocatechol, nitrilotri(methylphosphonic acid), etidronic acid, mineral salts, or mixtures thereof.

According to further embodiments, a binder based on high-silica aluminosilicate of the present invention comprises or consists of (in each case relative to the total dry weight of the binder)
a) 74.9 - 99.895 w%, preferably 74.99 - 99.89 w%, of at least one high-silica aluminosilicate, preferably vitreous pumice, vitreous volcanic ash, zeolitized tuff, burnt oil shale,
b) 0.005 - 25 w%, preferably 0.01 - 5 w%, of at least one accelerator for the reaction of the at least one high-silica aluminosilicates with water,
c) 0.1 - 25 w% of a co-binder selected from calcium sulfoaluminate cement,
where said accelerator is selected from the group consisting of alkanolamines, reducing agents, sugars, sugar acids, carboxylic acids or their salts, amino acids or their salts, sulfamic acid, glyoxal, acetylacetone, pyrocatechol, nitrilotri(methylphosphonic acid), etidronic acid, mineral salts, or mixtures thereof.

According to further embodiments, a binder based on high-silica aluminosilicate of the present invention comprises or consists of (in each case relative to the total dry weight of the binder)
a) 49.995- 99.895 w%, preferably 49.99 - 99.89 w%, of at least one high-silica aluminosilicate, preferably vitreous pumice, vitreous volcanic ash, zeolitized tuff, burnt oil shale,
b) 0.005 - 25 w%, preferably 0.01 - 5 w%, of at least one accelerator for the reaction of the at least one high-silica aluminosilicate with water,
c) 0.1 - 50 w% of a co-binder selected from a combination of calcium aluminate cement with calcium sulfate or a combination of calcium sulfoaluminate cement with calcium sulfate,
where said accelerator is selected from the group consisting of alkanolamines, reducing agents, sugars, sugar acids, carboxylic acids or their salts, amino acids or their salts, sulfamic acid, glyoxal, acetylacetone, pyrocatechol, nitrilotri(methylphosphonic acid), etidronic acid, mineral salts, or mixtures thereof.

The preferred accelerators in any of these embodiments are the same as described above.

In yet another aspect, the present invention also relates to a construction material, especially a mortar or a concrete comprising the binder based on high-silica aluminosilicate as described above. Thus, in particular, the present invention also relates to a construction material, preferably a concrete or mortar composition comprising or consisting of (in each case relative to the total dry weight of the construction material)
a) 5 - 95 w%, preferably 5 - 60 w% of a binder based on high-silica aluminosilicate, said binder comprising or consisting of
   a1) at least one high-silica aluminosilicate, preferably vitreous pumice, vitreous volcanic ash, zeolitized tuff, burnt oil shale,
   a2) at least one accelerator for the reaction of the at least one high-silica aluminosilicate with water, said accelerator being selected from the group consisting of alkanolamines, reducing agents, sugars, sugar acids, carboxylic acids or their salts, amino acids or their salts, sulfamic acid, glyoxal, acetylacetone, pyrocatechol, nitrilotri(methylphosphonic acid), etidronic acid, mineral salts, or mixtures thereof, preferably selected from the accelerators described as preferred above,
b) 5 - 95 w%, preferably 30 - 90 w% of at least one aggregate,
c) 0 - 90 w%, preferably 5 - 30 w% of at least one co-binder, said co-binder being different from the binder based on high-silica aluminosilicate a) and said co-binder being selected from the group consisting of cement, gypsum, lime, calcined magnesia, caustic magnesia, alumina, clay minerals, calcined clay, slag, class C fly ash,
d) 0 - 10 w% of further additives, and
e) optionally water in an amount to realize a mass ratio of water : dry constituents between 0.1 - 0.6, preferably 0.2 - 0.5, especially 0.2 - 0.35.

The binder based on high-silica aluminosilicate, the co-binder, and the further additives preferably are as described above. It can be preferred to combine two or more further additives in a construction material of the present invention. Thus, the construction material of the present invention comprises at least one high-silica aluminosilicate as described above and an accelerator selected from the group consisting of alkanolamines, reducing agents, sugars, sugar acids, carboxylic acids or their salts, amino acids or their salts, sulfamic acid, glyoxal, acetylacetone, pyrocatechol, sulfamic acid, glyoxal, acetylacetone, pyrocatechol, nitrilotri(methylphosphonic acid), and etidronic acid, alkaline metal or earth alkaline metal nitrates or nitrites or chlorides, aluminum sulfate, aluminum chloride, sodium sulfate, calcium sulfate, or mixtures thereof, as described above.

According to preferred embodiments, the construction material comprises at least one co-binder in 5 - 90 w%, preferably 5 - 30 w%, the co-binder being selected from Portland cement, calcium aluminate cement, calcium sulfoaluminate cement, gypsum, calcium sulfate, lime, ground calcium carbonate, pozzolans, caustic magnesia, and latent hydraulic binder, where pozzolana and latent hydraulic binder do not encompass high-silica aluminosilicate.

Aggregates can be any material that is non-reactive in the hydration reaction of binders. Aggregates can be any aggregate typically used for construction materials. Typical aggregates are for example rock, crushed stone, gravel, sand. Aggregates may also be fine aggregates or fillers such as ground limestone, ground dolomite, and/or ground aluminum oxide. Aggregates useful for the present invention can have any shape and size typically encountered for such aggregates. An especially preferred aggregate is sand. Sand is a naturally occurring granular material composed of finely divided rock or mineral particles. It is available in various forms and sizes. Examples of suitable sands are quartz sand, limestone sand, river sand or crushed aggregates. Suitable sands are for example described in standards ASTM C778 or EN 196-1.

According to embodiments, aggregates can also be one or more of the following (i) - (iv):
(i) biosourced materials, preferably of plant origin, more preferably biosourced materials of plant origin essentially composed of cellulose and/or lignin, especially biosourced materials originating from hemp, flax, cereal straw, oats, rice, rape, maize, sorghum, flax, miscanthus, rice husk, sugar cane, sunflower, kenaf, coconut, olive stones, bamboo, wood, or mixtures thereof. According to embodiments, biosourced materials of plant origin have a defined form which is preferably selected from fibers, fibrils, dust, meal, powders, shavings, pith, in particular pith of sunflower, maize, rape seed, and mixtures thereof.
(ii) synthetic non-mineral materials, preferably selected from the group comprising or consisting of thermoplastics, thermosetting plastics or resins, elastomers, rubbers, textiles fibers, plastic materials reinforced with glass or carbon fibers. Synthetic non-mineral materials can be filled or unfilled.
(iii) aggregates of inorganic nature from the deconstruction of civil engineering or building structures, preferably selected from the group comprising or consisting of waste concrete, mortar, bricks, natural stone, asphalt, tiles, tiling, aerated concrete, clinker, scrap metal.
(iv) aggregates of organic nature from the recycling of industrial products, in particular composite materials which are difficult to recycle, especially recycled insulating materials. Especially preferred examples are polystyrenes, polyurethanes, epoxy resins, phenolic resins, wood insulating materials, and mixtures thereof.

Most preferably, aggregates are in particulate form.

Throughout this invention, where a mass ratio of water: dry constituents is calculated, the total dry weight of the binder based on high-silica aluminosilicate and of the optionally present co-binder shall be taken into account. No corrections shall be made to compensate for any degree of hydraulicity. The term dry constituents in this context relates to all powdery components of a composition, especially binder based on high-silica aluminosilicate, aggregate, and co-binder.

The weight ratio of water to binder can be adjusted to control the rheology and/or strength of the wet construction material. A higher amount of water will lead to a more flowable wet composition and a lower amount of water to a pasty wet composition. The rheology may be adjusted by the amount of water in a way to yield a wet composition with a rheology ranging from self-levelling to very thick. Typically, a lower amount of water will also lead to an increased strength.

According to embodiments, where a co-binder is present, a weight ratio of binder based on high-silica aluminosilicate to co-binder in a construction material as described above is between 1:19 - 19:1, preferably 1:9 - 15:1, more preferably 1:6 - 12:1, still more preferably 1:5 - 9: 1, highly preferred 1:3 - 6: 1, especially 1:1 - 5:1.

According to embodiments, a hydraulically setting composition of the present invention comprises from 15 - 85 wt.-%, preferably 35 - 80 wt.-%, especially 50 - 75 wt.-%, each based on the total dry weight of the composition, of sand.

Further additives can be any additives common to the mortar and concrete industry. Especially the further additives can be selected from plasticizers, superplasticizers, shrinkage reducers, air entrainers, de-aerating agents, stabilizers, viscosity modifiers, thickeners, water reducers, retarders, water resisting agents, fibers, blowing agents, defoamers, redispersible polymer powders, dedusting agents, chromate reducers, pigments, biocides, corrosion inhibitors, and steel passivating agents.

According to embodiments, a construction material, especially a concrete or mortar, of the present invention comprises at least one superplasticizer selected from the group consisting of lignosulfonates, sulfonated vinylcopolymers, polynaphthalene sulfonates, sulfonated melamine formaldehyde condensates, polyethylene oxide phosphonates, polycarboxylate ethers (PCE), or mixtures thereof. Preferably, a construction material, especially a concrete or mortar, of the present invention comprises a PCE. Such PCE are particularly well suited to allow good processability of the hydraulically setting composition even at low water content.

According to embodiments, a construction material, especially a concrete or mortar, of the present invention comprises at least one thickener selected from the group consisting of starch, pectin, amylopectin, modified starch, cellulose, modified cellulose, such as carboxymethylcellulose, hydroxymethylcellulose, hydroxyethylcellulose, methylhydroxyethylcellulose, casein, xanthan gum, diutan gum, welan gum, galactomannanes, such as guar gum, tara gum, fenugreek gum, locust bean gum or cassia gum, alginates, tragacanth gum, dextran, polydextrose, layered silicates such as sepiolite, bentonite or vermiculite, and mixtures thereof.

According to embodiments, a construction material, especially a concrete or mortar, of the present invention comprises at least one redispersible polymer powder. The term redispersible polymer powder refers to a powder which contains a polymer and after introduction into water forms a stable dispersion. A redispersible polymer powder encompasses not only the polymer but typically also mixtures thereof with e.g. protective colloids, emulsifiers, and support materials. Redispersible polymer powders can be manufactured for example by spray drying of polymer dispersions as for example described in patent application EP1042391. Suitable redispersible powders are for example available from Wacker Chemie AG under the trade name Vinnapas. The use of redispersible powders of synthetic organic polymers is preferred for the context of the present invention. A synthetic organic polymer within the context of the present invention can be produced by radical polymerization of monomers selected form the group consisting of ethylene, propylene, butylene, isoprene, butadiene, styrene, acrylonitrile, acrylic acid, methacrylic acid, esters of acrylic acid, esters of methacrylic acid, vinylesters, vinylchloride. It is preferred that synthetic polymers are copolymers synthesized from two or more, preferably two, different monomers. The sequence of the copolymer can be alternating, blocked or random. Preferred synthetic organic polymers are copolymers of vinylacetate and ethylene, vinylacetate and ethylene and methylmethacrylate, vinylacetate and ethylene and vinylester, vinylacetate and ethylene and acrylic acid ester, vinylchloride and ethylene and vinyllaureate, vinylacetate and vinylversatate, acrylic ester and styrene, acrylic ester and styrene and butadiene, acrylic ester and acrylonitrile, styrene and butadiene, acrylic acid and styrene, methacrylic acid and styrene, styrene and acrylic acid ester, styrene and methacrylic acid ester. The glass transition temperature (Tg) of said synthetic organic polymers can vary in a wide range. Tg of suitable synthetic organic polymers can be for example between -50°C and +60°C, preferably between -45°C and +35°C, more preferred between -25°C and +15°C.

A construction material of the present invention, especially a concrete or mortar, may also contain liquid additives. Such liquid additives may be mixed with dry constituents of the construction material and lead to construction materials with a powdery or pasty consistency. The liquid additives can, for example, be aqueous solutions or dispersions of, for example, plasticizers or superplasticizers. Where water or aqueous additives are added to a construction material which is intended to be a dry mix, the amount of water should be limited to not more than 0.5 w% relative to the total dry wight of the construction material.

According to preferred embodiments a construction material, especially a concrete or mortar formulation comprises (in each case relative to the total dry weight of the construction material)
a) 5 - 95 w%, preferably 5-60 w% of a binder based on high-silica aluminosilicate, said binder comprising:
   a1) at least one high-silica aluminosilicate, preferably vitreous pumice, vitreous volcanic ash, zeolitized tuff, burnt oil shale,
   a2) at least one accelerator for the reaction of the at least one high-silica aluminosilicate with water, said accelerator being selected from the group consisting of alkanolamines, reducing agents, sugars, sugar acids, carboxylic acids or their salts, amino acids or their salts, sulfamic acid, glyoxal, acetylacetone, pyrocatechol, sulfamic acid, glyoxal, acetylacetone, pyrocatechol, nitrilotri(methylphosphonic acid), and etidronic acid, mineral salts, or mixtures thereof,
b) 5 - 95 w%, preferably 30 - 90 w% of at least one aggregate,
c) 0 - 90 w%, preferably 5 - 30 w% of at least one co-binder, the co-binder being selected from Portland cement, calcium aluminate cement, calcium sulfoaluminate cement, gypsum, hydraulic lime, air lime, calcined magnesia, caustic magnesia, ground granulated blast furnace slag, basic oxygen slag, clay minerals, especially calcined clays, class C fly ash,
d) 0 - 10 w% of further additives, and
e) optionally water in an amount to realize a mass ratio of water : dry constituents between 0.1 - 0.6, preferably 0.2 - 0.5, especially 0.2 - 0.35.

All features described as preferred above shall also apply in this case.

According to other embodiments, the present invention also relates to a construction material, preferably a concrete or mortar composition, comprising or consisting of (in each case relative to the total dry weight of the construction material)
a) 5 - 95 w%, preferably 5 - 60 w% of a binder based on high-silica aluminosilicate, said binder comprising or consisting of
   a1) at least one high-silica aluminosilicate, preferably vitreous pumice, vitreous volcanic ash, zeolitized tuff, burnt oil shale,
   a2) at least one accelerator for the reaction of the at least one high-silica aluminosilicates with water as described above,
b) 5 - 95 w%, preferably 30 - 90 w% of at least one aggregate,
c) optionally 20 - 80 w%, preferably 40 - 80 w% of at least one co-binder selected from the group consisting of Portland Cements, calcium aluminate cements, calcium sulfoaluminate cements, gypsum or mixtures thereof,
d) 0 - 10 w% of further additives, and
e) optionally water in an amount to realize a mass ratio of water : dry constituents between 0.1 - 0.6, preferably 0.2 - 0.5, especially 0.2 - 0.35.

A construction material of the present invention can be made by mixing the constituents, especially the binder based on high-silica aluminosilicate, the aggregate, and optionally present co-binder, further additives, and water by conventional means. Suitable mixers are for example horizontal single shaft mixers, twin shaft paddle mixers, vertical shaft mixers, ribbon blenders, orbiting mixers, change-can mixers, tumbling vessels, vertical agitated chambers or air agitated operations. Mixing can be continuous or batch-wise.

According to a preferred embodiment, the construction material of the present invention is a one-component mixture. That means that all the individual constituents are intermixed. One-component compositions are in particular easy to handle and exclude the risk of a mix up or wrong dosing of individual constituents by users.

However, it is in principle possible to provide the construction material of the present invention as a two-component or even a multi-component composition. Two- or multicomponent compositions allow e.g. for adjusting the construction material with regard to specific applications.

Typically, a dry construction material of the present invention is mixed with water only very shortly before its application. This is because upon contact with water, a construction material of the present invention will start to harden. It is thus especially preferred to first make a dry construction material, especially a dry mortar or dry concrete, as described above and then mix this dry construction material with water at or near the place of application.

Methods and devices for mixing of the dry construction material with water are not particular limited and are known to the person skilled in the art. Mixing can be continuous, semi-continuous or batch-wise. Continuous mixing offers the advantage of a high material throughput.

The construction material, especially the concrete or mortar, of the present invention may thus be a dry construction material or a wet construction material.

According to embodiments a dry construction material is especially a dry mortar, a readymix mortar, or dry concrete. According to still further embodiments, a dry composition as described above is prepared on a job site, for example by intermixing at least one of the constituents with other constituents of the dry composition and/or by intermixing two or more components of a multicomponent material.

A construction material of the present invention may be a cementitious tile adhesive, a grouting material, a self-levelling underlayment, a self-levelling overlayment, a render, a repair mortar, a masonry thin join mortar or concrete, a screed, a wall leveller for interior or exterior use, a non-shrink grout, a thin joint mortar, a waterproofing mortar, or an anchoring mortar. A cementitious tile adhesive is especially according to standard EN 12004-1. A grouting material is especially according to standard EN 13888. A self-levelling underlayment or a self-levelling overlayment is especially according to standard EN 13813. A render is especially according to standard EN 998-1. A repair mortar is especially according to standard EN 1504-3. A masonry mortar or concrete is especially according to standards EN 998-2 and EN 206-1. A screed is especially according to standard EN 13813. A non-shrink grout is especially according to standard EN 1504-6. A thin joint mortar is especially according to standard EN 998-2. A waterproofing mortar is especially according to standard EN 1504-2. An anchoring mortar is especially according to standard EN 1504-6.

Upon mixing with water, a construction material, especially a concrete or mortar, of the present invention will start to set and harden. The setting and hardening of a construction material proceeds with time and physical properties, e.g. compressive strength is developed thereby.

In a last aspect the present invention relates to a hardened body obtained by curing a concrete or mortar composition as described above and which binder based on high-silica aluminosilicate or construction material has been mixed with water in an amount to realize a mass ratio of water: dry constituents between 0.1 - 0.6, preferably 0.2 - 0.5, especially 0.2-0.35.

Conditions for curing are not particularly limited and are known to the person skilled in the art. Especially, curing can be done at temperatures between 5°C and 200 °C and at pressures between 1 atm and 12 atm. Curing is possible under normal atmosphere, or in a water saturated atmosphere or under any other atmosphere. It is preferred that curing is done at 1 atm pressure and between 5 °C and 35 °C.

## Claims

1. The use of an accelerator for the reaction of high-silica aluminosilicates with water, said accelerator being selected from the group consisting of alkanolamines, reducing agents, sugars, sugar acids, carboxylic acids and their salts, amino acids and their salts, sulfamic acid, glyoxal, acetylacetone, pyrocatechol, nitrilotri(methylphosphonic acid), etidronic acid, mineral salts, or mixtures thereof.

2. The use according to claim 1, **characterized in that** the high-silica aluminosilicates have a content of SiO₂ of not less than 40 w%, preferably not less than 50 w%, relative to the total dry weight of the respective high-silica aluminosilicate, and determined by XRF as described in EN 196-2:2013.

3. The use according to at least one of the preceding claims, **characterized in that** the accelerator is selected from the group consisting of triethanolamine (TEA), triisopropanolamine (TIPA), diethanolisopropanolamine (DEI PA), ethanoldiisopropanolamine (EDIPA), fructose, mannose, maltose, glucose, galactose, dextrines, vinasse, molasses, gluconic acid, ascorbic acid, neuraminic acid, glucuronic acid, galacturonic acid, iduronic acid, mucilic acid, saccharic acid and their sodium, potassium or calcium salts, formic acid, glycolic acid, citric acid, lactic acid, malic acid, tartaric acid, oxalic acid, malonic acid, succinic acid, glutaric acid, adipic acid, salicylic acid and their sodium, potassium or calcium salts, glycine, glutamic acid, aspartic acid, polyaspartic acid, tetrasodium iminodisuccinate (IDS), diethylenetriaminepentaacetic acid (DTMA), nitrilotriacetic acid (NTA), sulfamic acid, glyoxal, acetylacetone, pyrocatechol, nitrilotri(methylphosphonic acid), etidronic acid, sodium thiocyanate, sodium chloride, calcium nitrite, calcium nitrate, calcium chloride, magnesium chloride, calcium sulfate, aluminum sulfate, aluminum chloride, sodium sulfate, thiosulfates, especially sodium thiosulfate, thiocyanates, and sulfides, especially potassium sulfide.

4. The use according to at least one of claims 1 - 2, **characterized in that** the accelerator is a mixture of two alkanolamines or of an alkanolamine with at least one further accelerator different from an alkanolamine.

5. The use according to claim 4, **characterized in that** the alkanolamine is selected from the group consisting of triethanolamine (TEA), triisopropanolamine (TIPA), diethanolisopropanolamine (DEIPA), ethanoldiisopropanolamine (EDIPA), and methyldiethanolamine (MDEA), especially of TIPA and/or DEIPA, and **in that** the at least one further accelerator is one further accelerator which is selected from the group consisting of fructose, mannose, maltose, glucose, galactose, dextrines, vinasse, molasses, gluconic acid, ascorbic acid, neuraminic acid, glucuronic acid, galacturonic acid, iduronic acid, mucilic acid, saccharic acid and their sodium, potassium or calcium salts, formic acid, glycolic acid, citric acid, lactic acid, malic acid, tartaric acid, oxalic acid, malonic acid, succinic acid, glutaric acid, adipic acid, salicylic acid and their sodium, potassium or calcium salts, glycine, glutamic acid, aspartic acid, polyaspartic acid, tetrasodium iminodisuccinate (IDS), diethylenetriaminepentaacetic acid (DTMA), nitrilotriacetic acid (NTA), sulfamic acid, glyoxal, acetylacetone, pyrocatechol, nitrilotri(methylphosphonic acid), etidronic acid, sodium thiocyanate, sodium chloride, calcium nitrite, calcium nitrate, calcium chloride, magnesium chloride, calcium sulfate, aluminum sulfate, sodium sulfate, aluminum chloride, thiosulfates, especially sodium thiosulfate, thiocyanates, and sulfides, especially potassium sulfide.

6. The use according to claim 4, **characterized in that** the alkanolamine is selected from the group consisting of triethanolamine (TEA), triisopropanolamine (TIPA), diethanolisopropanolamine (DEIPA), ethanoldiisopropanolamine (EDIPA), and methyldiethanolamine (MDEA), especially of TIPA and/or DEIPA, and **in that** two further accelerators are present, the first further accelerator being selected from sugars, especially fructose, mannose, maltose, glucose, or galactose, and the second further accelerator being selected from the group consisting of mineral salts and reducing agents, preferably from sodium thiocyanate, sodium chloride, calcium chloride, magnesium chloride, calcium nitrite, calcium nitrate, aluminum sulfate, aluminum chloride, sodium sulfate, calcium sulfate, sodium thiosulfate and potassium sulfide.

7. The use according to claim 4, **characterized in that** the alkanolamine is selected from the group consisting of triethanolamine (TEA), triisopropanolamine (TIPA), diethanolisopropanolamine (DEIPA), ethanoldiisopropanolamine (EDIPA), and methyldiethanolamine (MDEA), especially of TIPA and/or DEIPA, and **in that** two further accelerators are present, the first further accelerator being selected from sugars, especially fructose, mannose, maltose, glucose, or galactose, and the second further accelerator being selected from the group consisting of sugar acids, carboxylic acids and sulfamic acid, especially gluconic acid, ascorbic acid, neuraminic acid, glucuronic acid, galacturonic acid, iduronic acid, mucilic acid, saccharic acid, salicylic acid and their sodium, potassium or calcium salts, formic acid, glycolic acid, citric acid, lactic acid, malic acid, tartaric acid, oxalic acid, malonic acid, succinic acid, glutaric acid, adipic acid, and their sodium, potassium or calcium salts.

8. The use according to claim 4, **characterized in that** the alkanolamine is selected from the group consisting of triethanolamine (TEA), triisopropanolamine (TIPA), diethanolisopropanolamine (DEIPA), ethanoldiisopropanolamine (EDIPA), and methyldiethanolamine (MDEA), especially of TIPA and/or DEIPA, and **in that** three further accelerators are present, the first further accelerator being selected from sugars, preferably fructose, mannose, maltose, glucose, or galactose, and the second further accelerator being selected from the group consisting of sugar acid, carboxylic acids and sulfamic acid, preferably gluconic acid, ascorbic acid, neuraminic acid, glucuronic acid, galacturonic acid, iduronic acid, mucilic acid, saccharic acid and their sodium, potassium or calcium salts, formic acid, glycolic acid, citric acid, lactic acid, malic acid, tartaric acid, oxalic acid, malonic acid, succinic acid, glutaric acid, adipic acid, salicylic acid and their sodium, potassium or calcium salts, and the third further accelerator being selected from the group consisting of mineral salts and reducing agents, preferably from sodium thiocyanate, sodium chloride, calcium chloride, magnesium chloride, calcium nitrite, calcium nitrate, aluminum sulfate, aluminum chloride, sodium sulfate, calcium sulfate, sodium thiosulfate and potassium sulfide.

9. The use according to at least one of the preceding claims, **characterized in that** the accelerator is added in a total amount of between 0.005 - 25 w%, relative to the total dry weight of the high-silica aluminosilicate.

10. A binder based on high-silica aluminosilicate, preferably for use as a binder in concrete or mortars, said binder comprising or consisting of
a) at least one high-silica aluminosilicate, preferably vitreous pumice, vitreous volcanic ash, zeolitized tuff, burnt oil shale,
b) at least one accelerator for the reaction of the at least one high-silica aluminosilicate with water, said accelerator being selected from the group consisting of alkanolamines, reducing agents, sugars, sugar acids, carboxylic acids or their salts, amino acids or their salts, sulfamic acid, glyoxal, acetylacetone, pyrocatechol, nitrilotri(methylphosphonic acid), etidronic acid, mineral salts, or mixtures thereof,
c) optionally at least one co-binder,
d) optionally further additives different from b).

11. A binder based on high-silica aluminosilicate according to claim 10, **characterized in that** the accelerator is selected from the accelerators of claim 3, or **in that** the accelerator is a mixture as defined in any one of claims 4 - 8.

12. A construction material, preferably a concrete or mortar composition comprising or consisting of (in each case relative to the total dry weight of the construction material)
a) 5 - 95 w%, preferably 5 - 60 w% of a binder based on high-silica aluminosilicate, said binder comprising or consisting of
a1) at least one high-silica aluminosilicate, preferably vitreous pumice, vitreous volcanic ash, zeolitized tuff, burnt oil shale,
a2) at least one accelerator for the reaction of the at least one high-silica aluminosilicate with water, said accelerator being selected from the group consisting of alkanolamines, reducing agents, sugars, sugar acids, carboxylic acids or their salts, amino acids or their salts, sulfamic acid, glyoxal, acetylacetone, pyrocatechol, nitrilotri(methylphosphonic acid), etidronic acid, mineral salts, or mixtures thereof, preferably selected from the accelerators or mixtures of accelerators as defined in any of claims 4 - 9,
b) 5 - 95 w%, preferably 30 - 90 w% of at least one aggregate,
c) 0 - 90 w%, preferably 5 - 30 w% of at least one co-binder, said co-binder being different from the binder based on high-silica aluminosilicate a) and said co-binder being selected from the group consisting of cement, gypsum, lime, calcined magnesia, caustic magnesia, alumina, clay minerals, calcined clay, slag, class C fly ash,
d) 0 - 10 w% of further additives, and
e) optionally water in an amount to realize a mass ratio of water : dry constituents between 0.1 - 0.6, preferably 0.2 - 0.5, especially 0.2 - 0.35.

13. A construction material according to claim 12, **characterized in that** the construction material comprises at least one co-binder in 5 - 90 w%, preferably 5 - 30 w%, the co-binder being selected from Portland cement, calcium aluminate cement, calcium sulfoaluminate cement, gypsum, hydraulic lime, air lime, calcined magnesia, caustic magnesia, ground granulated blast furnace slag, basic oxygen slag, clay minerals, especially calcined clays, class C fly ash.

14. A binder based on high-silica aluminosilicate according to claim 10 or a construction material according to any of claims 12 - 13, **characterized in that** a co-binder is present and a weight ratio of high-silica aluminosilicate, especially vitreous pumice, vitreous volcanic ash, zeolitized tuff, burnt oil shale, to co-binder is between 1:19 - 19:1, preferably 1:9 - 15:1, more preferably 1:6 - 12:1, still more preferably 1:5 - 9:1, highly preferred 1:3 - 6: 1, especially 1:1 - 5: 1.

15. A hardened body obtained by curing a binder based on high-silica aluminosilicate as claimed in claims 10 - 11 or 14 or a construction material as claimed in at least one of claims 12 - 13 and which binder or construction material has been mixed with water in an amount to realize a mass ratio of water: dry powder between 0.1 - 0.6, preferably 0.2 - 0.5, especially 0.2 - 0.35.
